# FASCICULE DE BREVET EUROPEEN

(11) **EP 0 577 816 B1**
(45) Date de publication et mention de la délivrance du brevet: **07.04.1999**
(21) Numéro de dépôt: 93904086.1
(22) Date de dépôt: 14.01.1993
(51) Int. Cl.: C08L 83/16, C08K 5/00, C04B 35/56

(54) **COMPOSITION A BASE DE POLYSILANE(S)**
POLYSILANZUSAMMENSETZUNGEN
POLYSILANE-BASED COMPOSITION

(30) Priorité: 15.01.1992 FR 9200369; 25.09.1992 FR 9211724
(43) Date de publication de la demande: 12.01.1994
(73) Titulaire: FLAMEL TECHNOLOGIES, Société Anonyme, F-69693 Venissieux Cédex (FR)
(72) Inventeur: BRYSON, Nathan, F-69520 Grigny (FR)
(74) Mandataire: Ropital-Bonvarlet, Claude
(86) Numéro de dépôt international: FR9300040
(87) Numéro de publication internationale: WO9314164

(56) Documents cités:
- EP-A- 0 123 934
- EP-A- 0 251 678
- EP-A- 0 382 651
- GB-A- 2 222 170
- US-A- 5 025 048

## Description

La présente invention concerne des compositions à base de polysilane(s) utiles, notamment, pour la production de carbure de silicium. Le domaine de l'invention est celui de la stabilisation à l'air, en particulier à l'oxygène, et/ou à la température, de telles compositions à base de polysilane(s) ou de mélanges de polysilanes.

Les polysilanes sont des matériaux polymériques dont le squelette linéaire est constitué d'atomes de silicium liés entre eux. Ces matériaux, riches en silicium ont trouvé des applications dans de nombreux domaines techniques. Ils sont utilisés dans les industries de l'électronique et des composites, notamment en tant que photoconducteurs, semi-conducteurs, matériaux constitutifs de l'image en xérographie et microlithographie et, comme indiqué ci-dessus, en tant que précurseurs de céramiques au carbure de silicium (**CHEM. REV.** 1989, 89, 1410).

Plus précisément, les polysilanes sont ainsi principalement employés :
- pour réaliser des formes complexes et les pyrolyser pour les transformer en céramiques,
- pour filer les fibres continues et les transformer, par traitement thermique, en fibres céramique,
- pour élaborer des matériaux composites en céramique (à cette fin, on fait intervenir la composition de polysilanes comme matrice avec des fibres de carbone ou de céramique ou, comme liant, avec des poudres de céramique),
- pour élaborer des revêtements résistants à l'oxydation (on revêt des matériaux oxydables, tels que des matériaux composites carbone-carbone ou des fibres de carbone, avec ledit polysilane et on pyrolyse celui-ci), comme matériaux de remplissage des pores d'un matériau céramique poreux, et ce dans le but d'en améliorer les propriétés mécaniques,
- pour réaliser des films fins de céramique à utiliser en électronique.

### TECHNIQUE ANTÉRIEURE :

Les polysilanes peuvent être obtenus de différentes façons comme, par exemple, par condensation d'halogénosilanes, tels que des chlorosilanes, avec des métaux alcalins, comme cela est décrit dans les brevets **US 4 783 516** et **US 4 537 942,** ainsi que dans la publication CHEM. REV. 1989, 89 (6), 1359, ou par des réactions couplées de déshydrogénation faisant intervenir des catalyseurs, comme décrites dans les publications J. AMER. CHEM SOC. 1986, 108, 40/59 ou J. ORGANO-METALLIC CHEM., 1985, 2079, C11 ou par des réactions de redistribution, comme divulguées dans les brevets **US 4 824 919** et **US 4 310 651,** ou bien encore par modification chimique de polysilanes simples comme décrite, notamment, dans la publication POLYM. REPRINTS, 1987, 28, 222.

Les polysilanes considérés dans le cadre de la présente invention sont ceux de formule générale : 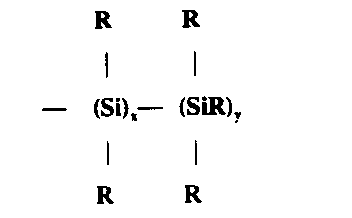 dans laquelle les groupements **R** peuvent être identiques ou différents, indépendants les uns des autres tout au long de la chaîne polymérique et choisis parmi les groupements suivants:
- hydrogène,
- groupements hydrocarbonés aliphatiques, linéaires, branchés ou cycliques ayant de 1 à 10 atomes de carbone,
- groupements aromatiques, alkyliques ou aralkyliques, éventuellement substitués par des groupements fonctionnels contenant de l'azote, de l'oxygène, du phosphore ou du bore,
- les groupements siliciques ou organo-siliciques,
- les groupements oléfiniques insaturés ayant de 1 à 18 atomes de carbone,
**x** et **y** étant choisis de manière à obtenir un polymère ayant un poids moléculaire moyen supérieur à 50 unités de masse.

La présente invention concerne, plus particulièrement. les polysilanes ayant sur leur squelette des groupements hydrogène (**Si - H**) et/ou des groupements oléfiniques possédant, de préférence, de 1 à 18 atomes de carbone et, plus préférentiellement, encore 2 atomes de carbone, ce qui correspond au groupement vinyle **(Vi :- CH = CH**_{**2**}**).**

A titre d'exemples, on peut citer :
- les polyalkylhydrogénosilanes dont, notamment, les polyméthylhydrogénosilanes, ci-après dénommés **PMS,**
- les polyvinylhydrogénosilanes ou les polyvinylhydrogènométhylsilanes, présentant des groupements hydrogènes et vinyliques dans leur squelette et ci-après dénommés **PVS.**

Les **PMS** sont décrits dans le brevet **US 4 537 942** et les **PVS** dans le brevet **US 4 783 516.**

Dans toutes les applications des polysilanes qui font intervenir des réticulations, dont notamment la céramisation, et qui sont celles visées, de préférence, par la présente invention, il est nécessaire de mettre en présence des chaines polysilaniques réactives par hydrosilylation.

L'hydrosilylation est une réaction radicalaire d'addition mettant en jeu un groupement hydrogène (**Si - H**) et un groupement oléfinique (**Si - Vi**).

Les compositions mises en oeuvre dans ces applications doivent donc comprendre des chaines polysilaniques comportant, par molécule, au moins deux groupements hydrogènes et/ou oléfiniques.

Selon une variante. il est possible d'avoir recours à des additifs de réticulation (ou agents de pontage) du type composé organique ou organosilicique, de structure polymérique ou non et comportant, également, au moins deux groupements hydrogènes et/ou oléfiniques par molécule.

Il en résulte que tous les polysilanes concernés par l'invention, dont notamment le **PVS** et le **PMS**, sont sujets à des réactions non désirées d'oxydation (**Si - H**) et/ou de réticulation (**Si - H** avec **Si - Vi**) en présence de l'air.

Les polyméthylsilanes **PMS** subissent, en contact avec l'air ambiant (donc avec de l'oxygène), une incorporation rapide d'oxygène à l'intérieur du squelette polymérique, ce qui conduit à des produits du type polysiloxane (**MeHSiO)**_{**n**} . De tels produits parasites sont tout à fait indésirables dans la perspective de la céramisation du polysilane par pyrolyse. Par ailleurs, cette oxydation rapide peut même conduire, dans certains cas, à une combustion spontanée du polymère.

Cette réactivité du **PMS**, vis-à-vis de l'oxygène, peut initier des réactions radicalaires d'hydrosilylation dans des mélanges **PMS/PVS, PMS/additif de réticulation oléfinique** et conduire à une réticulation prématurée du mélange à l'air ambiant. Il en résulte une solidification et une insolubilisation du polymère avec l'incorporation d'oxygène, qui rendent impossible toute manipulation et utilisation ultérieures de celui-ci.

Concernant les **PVS,** qui contiennent des groupements hydrogène et vinylique dans la même molécule, ils sont susceptibles de réagir à l'air ambiant et/ou aux températures élevées par hydrosilylation, conduisant à une solidification prématurée et indésirée du produit. De la même façon que pour les **PMS,** ces oxydation et réticulation rapides peuvent engendrer, dans certains cas, une combustion spontanée de la composition polymérique.

Il existe donc, de façon patente, un problème de stabilité à l'état non réticulé des polysilanes vis-à-vis de l'air, voire même vis-à-vis de la température, pour ceux qui contiennent des groupements oléfiniques, notamment, vinyliques. Cet inconvénient majeur représente un frein important aux développements des techniques de préparation de céramiques au carbure de silicium à partir des polysilanes, étant donné que les manipulations doivent s'effectuer sous atmosphère inerte, ce qui constitue une très gênante contrainte.

On connaît, par le brevet **US 5 025 048,** la stabilisation, tant dans ***l'état réticulé,*** d'un polymère silicone du type polycarbosiloxane obtenu par réaction de :
**a** - d'un polysiloxane cyclique (tétraméthyltétrasiloxane-pentaméthylcyclopentasiloxane-hexaméthylcyclohexasiloxane-) ou d'un siloxysilane tétraèdrique (tétrakishydrogénodiméthylsiloxysilane), et/ou d'un polyorganohydrosiloxane (α, ω-Me₃ - ou Me₂H - polydiméthylméthylhydrogénosiloxane) ; cette entité a correspondant à l'entité **polyorganosiloxane (POS)** de type SiH ;
**b** - avec des polyoléfines polycycliques (di-cyclo et tri-cyclopentadiènes) ; cette entité **b** étant celle porteuse de sites réactifs oléfiniques susceptibles d'être hydrosilylés par les SiH de l'entité **a** ;
en présence d'un catalyseur platinique d'hydrosilylation.
Voir les formules I.a, I.b, II et III colonnes 2 et 3 du brevet **US 5 025 048** pour l'entité **a** et les lignes 34 à 48 colonne 3 pour l'entité **b**, ainsi que les lignes 36 à 42 colonne 4 pour le catalyseur platinique.
Les composés utilisés pour la stabilisation de ces POS réticulés comprennent au moins un phénol masqué et au moins une amine masquée.
Les composés anti-oxydants préférés sont des dérivés de l'acide malonique substitué (voir colonne 7 ligne 4 à colonne 12 ligne 29). La TINUVIN® 144 de CIBA GEIGY est l'anti-oxydant plus particulièrement préféré.
Il est important de noter que ces anti-oxydants sont mis en oeuvre pour stabiliser le POS réticulé. Ainsi, il est précisé, colonne 12 lignes 54 à 57 exemple 1, que l'anti-oxydant est mélangé aux échantillons, qui sont ensuite réticulés pendant plusieurs heures à haute température. De même, il ressort de la colonne 13 exemple 2 lignes 21 à 32 que le stabilisant est rajouté juste avant la réticulation par hydrosilylation (SiH de l'entité **a**/C =C de l'entité **b**).
Ces anti-oxydants selon l'**US 5 025 048** sont des composés aminés ou phosphorés agissant comme des agents retardateurs du vieillissement des POS réticulés. Leur mode d'action consiste à réagir, après réticulation, avec le catalyseur au platine par ***complexation,*** de manière à l'inhiber une fois que celui-ci a joué son rôle dans la réticulation. Ces stabilisants anti-oxydants ne réagissent pas et n'interfèrent pas au cours de la réticulation. Ils ne prennent pas part à la réaction d'hydrosilylation. Ils sont ainsi préservés et peuvent jouer pleinement leur rôle de stabilisant anti-vieillissement dans le polymère final réticulé.

Ainsi, dans l'**US 5 025 048**, les polymères mis en oeuvre sont des polysiloxanes, l'anti-oxydant utilisé stabilise les polysiloxanes dans l'état réticulé. Ce brevet US ne résout pas le problème sus-évoqué de stabilité des polysilanes.

La demande de brevet britannique **GB 2 222 170** divulgue un procédé de production de polysilanes vinyliques, utiles comme précurseurs de céramiques en carbure de silicium. Cette demande de brevet n'enseigne rien en ce qui concerne la stabilisation à l'état non réticulé, de polysilanes réticulables par hydrosilylation. Les auteurs de cette demande de brevet britannique se contentent de préconiser une réticulation thermique sous atmosphère inerte des polysilanes vinyliques décrits dans cette demande. Tout cela ne concourt absolument pas à la résolution du problème technique sus-évoqué.

L'un des buts essentiels de la présente invention est de pallier cet inconvénient en fournissant une composition à base de polysilane utile, notamment, pour l'obtention de carbure de silicium, qui soit stable en atmosphère et à température ambiante.

Un autre but de l'invention est de fournir une composition qui permette d'atteindre de hauts rendements de céramisation lors de la préparation ultérieure de céramiques en carbure de silicium.

### EXPOSÉ DE L'INVENTION :

Ainsi, c'est après de longues et laborieuses recherches que la Demanderesse a mis en évidence, de manière tout à fait surprenante et inattendue, que les polysilanes peuvent voir leur sensibilité à l'air fortement diminuée, voire même supprimée, par association avec au moins un système antioxydant, présent dans une quantité efficace qui reste relativement faible.

On perçoit aisément tout l'intérêt de la présente invention, notamment au regard de la synthèse, du stockage et de la mise en oeuvre desdits polysilanes, qui s'en trouvent facilités.

### MEILLEURE MANIÈRE DE RÉALISER L'INVENTION :

La présente invention a donc pour objet la stabilisation des compositions à base de polysilanes, utile notamment pour la production de carbure de silicium.
Ces compositions comprennent :
▲ des chaînes ***polysilaniques :***
   → de formule générale : 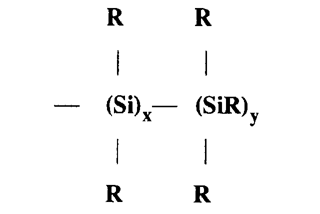 dans laquelle :
      les groupements **R** peuvent être identiques ou différents, indépendants les uns des autres tout au long de la chaîne polymérique et choisis parmi les groupements suivants:
      - hydrogène,
      - groupements hydrocarbonés aliphatiques, linéaires, branchés ou cycliques yant de 1 à 10 atomes de carbone,
      - groupements aromatiques, alkyliques ou aralkyliques, éventuellement substitués par des groupements fonctionnels contenant de l'azote, de l'oxygène, du phosphore ou du bore,
      - les groupements siliciques ou organo-siliciques,
      - les groupements oléfiniques insaturés ayant de 1 à 18 atomes de carbone, **x** et **y** sont choisis de manière à obtenir un polymère ayant un poids moléculaire moyen supérieur à 50 unités de masse ; ces chaînes polysilaniques étant, avantageusement, celles ayant sur leur squelette des groupements hydrogène (**Si - H**) et/ou des groupements oléfiniques (Si-X), X étant un radical insaturé possédant, de préférence, de 1 à 18 atomes de carbone et, plus préférentiellement encore, 2 atomes de carbone, ce qui correspond au groupement vinyle (**Vi :- CH = CH**_{**2**}) ;
   → susceptibles de se dégrader par oxydation et formation de produits du type polysiloxane,
▲ et/ou des chaînes **polysilaniques** de formule générale telle que définie ci-dessus, et aptes à se lier directement entre elles par réaction entre des radicaux **Si - H** et **Si - X,** et/ou indirectement entre elles par l'intermédiaire d'un additif de réticulation et par réaction entre des radicaux **A - X** et **A - H, A** étant un radical organique, organosilicique ou silicique, X étant un radical oléfinique comportant, de préférence, de 1 à 18 atome de carbone et, plus préférentiellement encore, étant constitué pour un radical vinylique (VT:CH=CH₂) ;
▲ et au moins un système antioxydant constitué par au moins un composé antioxydant choisi parmi les antioxydants phénoliques, oléfiniques ou aminés de la chimie des polymères organiques exempts de silicium et leurs mélanges et, de préférence, parmi les antioxydants phénoliques et leurs mélanges ;
ces chaînes polysilaniques étant stabilisées à l'état non réticulé.

Conformément à l'invention, les composés antioxydants utilisés dans la chimie des polymères organiques exempts de silicium sont du type de ceux exemplifiés dans:
- HANDBOOK OF POLYMER SCIENCE AND TECHNOLOGY, Ed. Cheremisinoff, Vol 2, Chap. 9, pp 261-290,
- POLYM. DEGRAD. AND STABILITY 1991, 34, 1,
- J. Pospisil dans ADVANCES IN POLYM. SCI., Vol 101, pp 66-180.

Ont ainsi été résolus, le problème de la stabilité des polysilanes susceptibles de se dégrader prématurément par hydrosilylation au contact de l'air et à température ambiante, mais aussi celui de la protection contre l'oxydation des polysilanes (sujets à l'incorporation indésirable d'oxygène dans leurs molécules (formation de polysiloxanes avant ou pendant le traitement ultérieur de céramisation par pyrolyse).
Ce résultat est pour le moins étonnant, dans la mesure où ces antioxydants sont connus pour inhiber l'oxydation, mais aussi les réactions radicalaires, comme la réticulation des polysilanes qui doit, préférablement, se dérouler juste avant la céramisation, comme cela sera vu plus loin.
Dans ces conditions, on pouvait donc craindre que l'emploi de ces inhibiteurs radicalaires, que sont les composés antioxydants considérés, perturbent gravement cette étape de réticulation, de laquelle dépend fortement le rendement de conversion des polysilanes en carbure de silicium.
Il est donc du mérite de la Demanderesse d'avoir pu procéder à cette mise en évidence et d'avoir ainsi surmonté un préjugé technique particulièrement défavorable.

L'efficacité du système antioxydant varie en fonction de sa concentration dans la composition polysilanique et de sa réactivité intrinsèque qui dépend de la nature des groupes fonctionnels formant sa structure.

La présente invention permet de stocker et d'utiliser le polysilane à l'air ambiant, à l'état pur ou en solution, sans risque de solidification et/ou d'altération par formation de polysiloxane.

La présente invention fournit, également, des compositions de polysilane se prêtant particulièrement bien aux éventuelles transformations ultérieures de céramisation et qui, de surcroît, permettent d'obtenir de hauts rendements de céramisation, avec formation très limitée de sous-produits indésirables.

Conformément à une disposition préférée de la présente invention, le système antioxydant comprend :
- au moins un premier composé C₁, dénommé antioxydant primaire, et choisi dans la famille des phénols et/ou des amines et/ou des oléfines,
- et au moins un deuxième composé C₂, dénommé antioxydant secondaire, et choisi dans la famille des produits phosphorés et/ou des produits soufrés.

Il a, en effet, été découvert que de telles combinaisons présentent une importante synergie au regard des effets de stabilisation des polysilanes vis-à-vis de l'oxygène de l'air et de l'amélioration du rendement de céramisation.

On précise ci-après la nature d'antioxydants primaires C₁ qui conviennent aux fins de l'invention.

### ANTIOXYDANTS PHÉNOLIQUES :

On peut notamment utiliser, dans les compositions de l'invention, les antioxydants :
- de la famille de l'hydroquinone, qui répondent à la formule :
   (I) 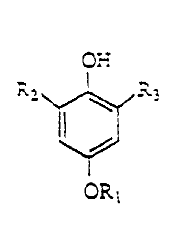
- de la famille des crésols, qui répondent à la formule :
   **(II)** 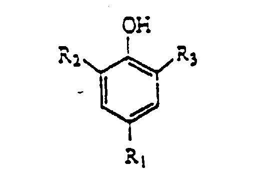
- de la famille du catéchol, qui répondent à la formule :
   **(III)** 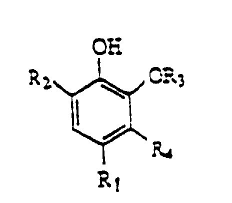 formules dans lesquelles **R**_{**1**}**, R**_{**2**}**, R**_{**3**} **et R**_{**4**} représentent indépendamment l'hydrogène ou un groupe carboné en **C**_{**1**}**-C**_{**18**}**,** aromatique ou aliphatique, pouvant inclure des fonctions réactives.

Les dimères ou polymères de ces composés constituent, eux aussi, des antioxydants, connus selon l'art antérieur et utilisables aux fins de l'invention.

A titre illustratif, on précise ci-après les formules de certains de ces antioxydants polymériques de la famille des crésols.

Dans lesdites formules, les substituants **R**_{**5**} sont identiques ou différents, et représentent l'hydrogène ou un groupe alkyle en **C**_{**1**}**-C1**_{**8**}**.**

Aux fins de l'invention, conviennent donc également les composés de formule :
**(IIa)** 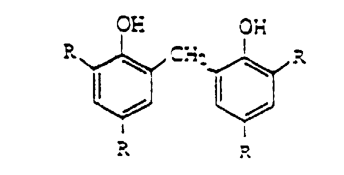 et, notamment, le 2,2 méthylènebis (4,6-di-tert-butylphénol) et le 2,2'-méthylènebis (4-méthyl-6-tert-butylphénol),
**(IIb)** 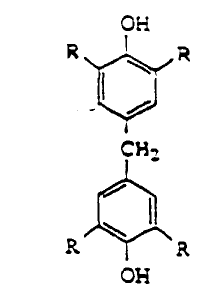 et, notamment, le 4,4'-méthylènebis (2,6-di-tert-butylphénol),
**(IIc)** 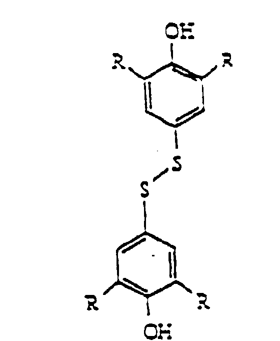 et, notamment, le 3-tert-butyl-4-hydroxy-5-méthylphényl disulfure,
**(IId)** 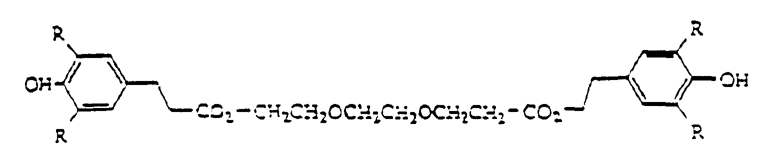 et, notamment, le triéthylèneglycolbis3-(3-tert-butyl-4-hydroxy-5-méthylphényl)-3-propionate, commercialisé sous le nom de **IRGANOX 245,**
**(IIe)** 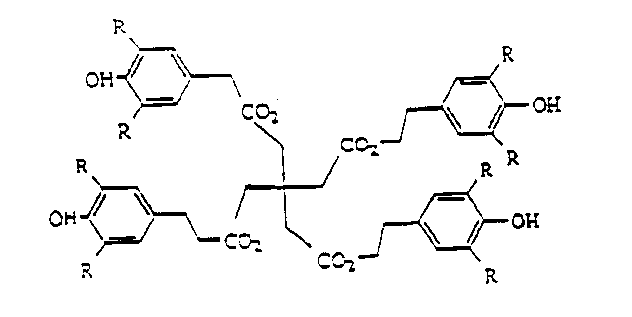 et, notamment, le pentaérythrityl - tétrakis - [3-(3,5-di-tert-butyl-4-hydroxy- phényl) propionate], commercialisé sous le nom de **IRGANOX 1010.**
Parmi les antioxydants phénoliques, on préfère :
- l'hydroquinone (formule **(I)** dans laquelle **R**_{**1**} **= R**_{**2**} **= R**_{**3**} **= H**),
- le p-méthoxyphénol (formule **(I)** dans laquelle **R**_{**1**} **= CH**_{**3**}**, R**_{**2**} **= R**_{**3**} **= H**),
- le 1,2-dihydroxybenzène (ou catéchol) (formule **(III)** dans laquelle **R**_{**1**} **= R**_{**2**} **= R**_{**3**} **= R**_{**4**} **= H**),
- le 6-tert-butyl-1,2-dihydroxybenzène (formule **(III)** dans laquelle **R**_{**1**} **= R**_{**3**} **= R**_{**4**} **= H et R**_{**2**} = tert-butyl),
- le 2,6-di-tert-butyl-4-méthylphénol (ou **BHT**) (formule **(II)** dans laquelle **R**_{**1**} **= CH**_{**3**}**, R**_{**2**} **= R**_{**3**} **= ter-butyl**),
- le 4,4'-méthylènebis (2,6-di-tert-butylphénol) (formule **(IIb**) dans laquelle R = tert-butyl).
- le triéthylèneglycolbis-3-(3-tert-butyl-4-hydroxy-5-méthylphényl)-3-proprionate (formule **(IId)** dans laquelle **R** = tert-butyl).
- le pentaérythrityl-tetrakis-(3-(3,5-di-tert-butyl4-hydroxyphényl)proprionate) (formule **(IIe)** dans laquelle **R** = tert-butyl).

Le **BHT** et ses dérivés de Formule **IIb, IId** et **IIe** sont particulièrement préférés.

### ANTIOXYDANTS OLÉFINIQUES :

On cite, à titre illustratif, le néo-allo-ocimène (ou 2,6-diméthyl-2,4,6-octatriène).

### ANTIOXYDANTS AMINÉS :

On peut, notamment, utiliser dans les compositions de l'invention, des antioxydants :
- de la famille des amines aromatiques, telles que la -β, β'-dinaphtylamine, la phénothiazine, la N-phényl-2-naphtylamine ...,
- de la famille de la quinoléine, qui répondent à la formule : 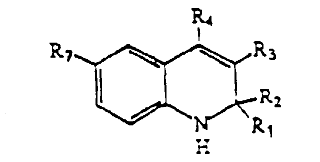
- de la famille des phénylènediamines qui répondent à la formule : 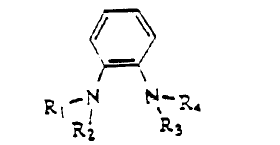 les substituants **R**_{**1**} **à R**_{**4**} des deux formules sus-indiquées ayant la même définition que celle donnée précédemment,
- de la famille de triarylamines et de leurs dérivés,
- de la famille des amines de HALS, tels que :
   ◇ le bis [2,2,6,6-tétraméthyl-4-pipéridinyle] sebacate.
   ◇ le 2(2'-hydroxy-3'-5'-di-t-butyl phényl)-5-chlorobenzotriazole).

De la même façon, il existe des polymères, eux-mêmes antioxydants. A titre illustratif, on indique ci-après la formule d'un monomère de polymères de la famille de la quinoléine utiles aux fins de l'invention :

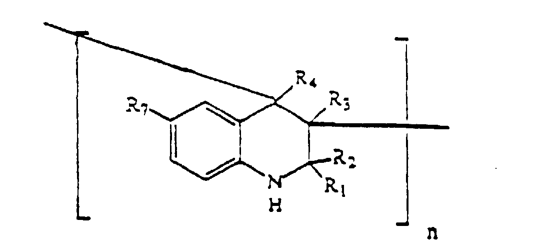

On précise ci-après la nature d'antioxydants secondaires C₂ qui conviennent aux fins de l'invention.

### ANTIOXYDANTS SOUFRÉS :

Les antioxydants C₂ soufrés ont, de préférence, une des formules générales suivantes :

**(R'O**_{**2**}**C-R-)**_{**n**}**S, (R'NCS**_{**2**}**)**_{**n**}**M, ((R'O)**_{**2**}**PS**_{**2**}**)**_{**n**}**M, (R'OCS**_{**2**}**)**_{**n**}**M**

dans laquelle :
- **R'** est un groupement organique aromatique, aliphatique ou aralkylique ayant de 1 à 18 atomes de carbone. Les groupements **R** peuvent être identiques ou différents, indépendants les uns des autres dans le composé. Ces groupements sont typiquement non réactifs et ont pour fonction de rendre l'antioxydant secondaire compatible avec le polysilane considéré,
- **M** est un métal du type **Ni, Zn** ou autre,
- **n** est inférieur ou égal à 2.

A titre d'exemples de produits soufrés préférés, on peut citer, de façon non limitative les dérivés dialkylthiodipropionates, tels dilaurylthiodipropionate, le distéarylthiodipropionate ou les dérivés métalliques de dithiocarbamates, de dithioxanthates ou de dithiophosphonates, les dérivés de dialkylthiodipropionate étant particulièrement préférés.

### ANTIOXYDANTS PHOSPHORÉS :

Les produits phosphorés utiles comme oxydants secondaires **C**_{**2**} sont choisis parmi les composés de formules générales suivantes :

**(R"O)**_{**3**}**P, (R")**_{**3**}**PO, (R")**_{**2**}**PO**_{**2**}**H, R"O-P-R"'**

dans lesquelles :
- **R"** est un groupement organique aromatique, aliphatique ou aralkylique ayant de 1 à 18 atomes de carbone, les groupements **R"** pouvant être indentiques ou différents et indépendants les uns des autres dans le composé,
- **R"'** est un groupement chélatant, de préférence, le catéchol.

Ces groupements **R"** et **R"'** sont typiquement non réactifs. Ils ont pour fonction de rendre l'antioxydant secondaire **C**_{**2**} compatible avec le polysilane considéré.

Parmi les produits phosphorés, on préfère ceux choisis parmi la liste non limitative suivante :
- tris (nonylphényl) phosphite,
- triphénylphosphite,
- tri-t-butylphosphite,
- catéchol-mono(2,6-di-tert-butyl-4 méthylphényl)phosphite.

Le tris (nonylphényl) phosphite étant particulièrement préféré en raison de sa disponibilité commerciale et sa compatibilité avec les polysilanes testés.

Avantageusement, les concentrations relatives en oxydant primaire C₁ et en oxydant secondaire C₂ sont choisies de telle sorte que le ratio C₁/C₂, exprimé en poids sec, soit compris entre 0,1 et 3,0, de préférence entre 0,3 et 1,2.

La concentration en système antioxydant dans la composition est choisie pour satisfaire un certain nombre de variables spécifiques d'une application donnée. L'homme du métier est en mesure d'optimiser la quantité des systèmes antioxydants à faire intervenir. De façon générale, il convient d'en introduire suffisamment pour obtenir le résultat recherché (stabilisation pendant au moins un temps donné), tout en tenant compte du facteur rentabilité économique qui conduit à minimiser les quantités mises en oeuvre. En outre, à de fortes concentrations, le système antioxydant est susceptible de se comporter comme une impureté qui peut modifier les propriétés du polymère et avoir des incidences négatives sur la céramisation par pyrolyse ultérieure.

Pour fixer les idées, il peut être précisé que le système antioxydant est présent dans la composition, de préférence à raison de 10⁻⁵ % à 10 % (de 0,1 à 10⁵ ppm) en poids par rapport au poids de polysilane et, plus préférentiellement encore, de 0,01 % à 1 % (de 100 à 10 000 ppm).

En tout état de cause, les performances obtenues par le système antioxydant selon l'invention, et en particulier par les combinaisons synergiques d'antioxydants primaires C₁ et d'antioxydants secondaires C₂, permettent de minimiser les quantités introduites dans la composition.

L'incorporation du système antioxydant dans la composition à base de polysilane(s) peut intervenir pendant ou après la fabrication desdits polysilanes.

Généralement, le système antioxydant est introduit sous forme de liquide, par exemple sous forme de solution dans un solvant ou dans un mélange de solvants appropriés.

L'ajout du système antioxydant, concomitamment à la synthèse des polysilanes, permet de stabiliser directement ceux-ci et, par là même, de faciliter le stockage et les manipulations.

La composition de polysilane peut être conservée en solution ou sous forme pure, après évaporation du solvant.

Les solvants susceptibles d'être employés dans les compositions suivant l'invention sont évidemment inertes vis-à-vis des polysilanes et du système antioxydant. Il s'agit, avantageusement, de solvants non polaires dans lesquels le polysilane est soluble. On citera, à titre d'exemples :
- le pentane,
- l'hexane, l'heptane et autres hydrocarbures aliphatiques,
- le benzène, le toluène, le xylène et autres hydrocarbures aromatiques,
- le tétrahydrofuranne, le diéthyléther, le dioxanne et autres éthers,
- le dichlorométhane, le chloroforme, le chlorobenzène et autres hydrocarbures chlorés,
- et leurs mélanges.

De tels solvants peuvent intervenir dans des proportions très variables. Il n'y a, au sens de l'invention, aucune limitation quant à la quantité de solvants mise en oeuvre. Les compositions stables selon l'invention peuvent, notamment, contenir de 5 à 90 % en poids de solvant. On ajustera, avantageusement, le taux de solvant en fonction de la viscosité souhaitée pour la solution de polysilane.

L'une des compositions préférées suivant la présente invention contient du **PVS** ou du **PVS** et du **PMS,** ainsi qu'une combinaison synergique comprenant un antioxydant primaire **C**_{**1**}**,** tel que le 2,6-di-tert-butyl-4-méthylphénol (**BHT**) et un antioxydant secondaire **C**_{**2**}**,** tel que le dilaurylthiodiproprionate **(LTDP)** ou le tris(nonylphényl) phosphite **(TNPP).**

Suivant une autre modalité préférée de l'invention, le polysilane mis en oeuvre dans la composition est un polysilane du type **PMS** associé avec un additif de réticulation comprenant au moins deux groupements insaturés ou un polysilane du type **PVS** associé avec un additif de réticulation comprenant au moins deux groupements hydrogènes.

Les additifs de réticulation, pouvant être employés dans les compositions suivant l'invention, sont des composés organiques ou organosiliciques, de structure polymérique ou non.

Ils comprennent des groupements hydrogènes et/ou des groupements insaturés, de préférence vinyliques, de manière à pouvoir relier entre elles au moins deux chaînes polysilaniques à substituants hydrogènes et/ou oléfiniques.

On peut citer, à titre d'additifs de réticulation préférés, les composés suivants :

**C**_{**6**}**H**_{**5**} **- Si - H**_{**3**}**, CH**_{**3**} **- CH**_{**2**} **- Si - H**_{**2**}**, Si - (Vi)**_{**4**} **ou C**_{**6**}**H**_{**4**}**(Vi)**_{**2**}

Avec un polysilane du type **PVS**, contenant de l'hydrogène ou un mélange de polysilanes **PMS/PVS** contenant de l'hydrogène, une réticulation thermique s'opère à des températures relativement basses (inférieures à 300° C). Il s'agit de réactions d'hydrosilylation qui provoquent la solidification du produit.

Cette étape de réticulation est essentielle pour obtenir de forts taux de conversion du polysilane en carbure de silicium, dans la mesure où elle intervient juste avant ou pendant la céramisation. Le réseau de réticulation formé favorise le maintien des atomes de silicium dans la matrice à très haute température, ce qui permet la minéralisation du silicium et du carbone avec un minimum de perte de matières.

Les taux de conversion, de l'ordre de 60 %, constatés pour le **PVS** et pour les mélanges **PVS/PMS,** signifient que 40 % du matériau de départ est perdu lors de la pyrolyse. Cette perte de matières est due, pour l'essentiel. à la formation de gaz, tels que l'hydrogène, le méthane, l'éthane, les méthylsilanes, etc. Cette émission de gaz est à l'origine de la formation de bulles, de pores et de fissures qui peuvent gravement affecter les propriétés mécaniques de la pièce céramique finale.

La stabilisation obtenue grâce à la composition selon l'invention se réalise sans modification du rendement céramique en pyrolyse, pour ce qui concerne le **PMS,** tandis que pour les **PVS,** le rendement céramique peut augmenter avec l'ajout d'un système antioxydant. La qualité des céramiques obtenues s'en trouve donc améliorée. Ceci constitue un avantage inattendu de l'invention.

Les procédés de préparation des compositions suivant l'invention constituent un autre objet de cette dernière.

Sont également couverts :
- l'utilisation du système antioxydant sus-décrit pour la stabilisation à l'air et/ou à la température - dans un état non réticulé - de compositions à base de polysilanes, telles que définies supra ;
- et un procédé pour la production de carbure de silicium. consistant à pyrolyser, sous vide et en atmosphère inerte, les compositions stabilisées de l'invention.

### POSSIBILITÉ D'APPLICATION INDUSTRIELLE :

On a insisté sur le fait que l'invention présente un grand intérêt dans la production de carbure de silicium par céramisation, mais il doit être souligné qu'il ne s'agit pas de l'unique débouché des compositions suivant l'invention. Celles-ci peuvent être utilisées dans les mêmes applications que les polysilanes de l'art antérieur. L'invention, ses avantages et ses variantes de mise en oeuvre ressortent des exemples ci-après énoncés.

### EXEMPLES

Pour tous les exemples 1, 2, 4 à 6, 9 à 13, la stabilité des compositions à base de polysilane(s) testées et contenant des groupements insaturés, est donnée par la durée de stabilisation à l'air à 25° C, correspondant au temps nécessaire pour l'apparition d'une peau de produit réticulé à la surface d'une goutte de composition polysilanique posée sur une plaque de verre.

### EXEMPLE 1 : PRÉPARATION D'UN POLYVINYLSILANE CONTENANT DES GROUPEMENTS Si - H.

Dans un réacteur de 1 litre, on introduit 70 g de sodium, 333 ml de toluène et 116 ml de dioxane et on procède ensuite à un chauffage à reflux pour disperser le sodium. Un mélange de chlorosilane (114 ml **MeViSiCl**_{**2**}**,** 56 ml **Me**_{**3**}**SiCl,** 28 ml **MeHSiCl**_{**2**}) est introduit en une seule fois dans le mélange réactionnel chaud. En fin de réaction, le polymère est isolé par une série de manipulations qui incluent la filtration et l'évaporation du solvant. Cela donne lieu en final à 85 g d'un matériau polymère fluide non volatil. L'exposition d'un échantillon de ce matériau à l'air provoque une réticulation de surface dans un temps très court (inférieur à 2 minutes). La pyrolyse de ce polymère dans une atmosphère inerte à 950° C conduit à un matériau céramique essentiellement constitué de carbure de silicium, avec un rendement de 62 %.

### EXEMPLE 2 : PRÉPARATION D'UN POLYVINYLSILANE NE CONTENANT PAS DES GROUPEMENTS Si - H.

De la même façon que l'exemple 1, on fait réagir du sodium avec un mélange de chlorosilanes **MeViSiCl**_{**2**} et **Me**_{**3**}**SiCl** dans un ratio de 0,6 à 0,8. La filtration et l'évaporation des composants volatils permettent d'obtenir 66 g d'un produit liquide. On observe que ce produit est indéfiniment stable à l'air (stabilité supérieure à deux semaines). La pyrolyse du polymère selon l'**exemple 2** sous atmosphère inerte à 950° C conduit à la formation d'un matériau céramique avec un taux de conversion de polysilane en carbure de silicium de 22 %.

### COMMENTAIRES:

**Les exemples 1** et **2** montrent que la présence de **Si - H** et de **SiVi** dans le polysilane est l'un des facteurs responsables de l'instabilité à l'air et du fort rendement lors de la pyrolyse des polymères **PVS.**

### EXEMPLE 3 : PRÉPARATION D'UN POLYMETHYLSILANE.

De la même façon qu'à **l'exemple 1,** on fait réagir du sodium avec un chlorosilane **MeHSiCl**_{**2**} en solution dans du tétrahydrofuranne. Après filtration et évaporation des composés volatils, on recueille un produit solide avec un rendement pondéral de 65 %. L'analyse **RNM** du produit solide obtenu permet de définir la formulation suivante :

**[(MeSi - H)**_{**0,6**}**(MeSi)**_{**0,4**}**]**_{**x**}

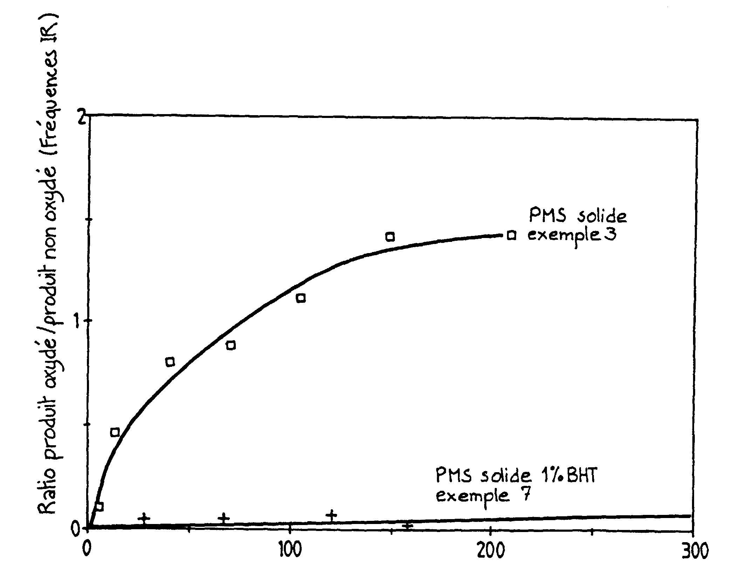

Exposé à l'air, ce produit s'oxyde rapidement (stabilité < 15 mn), cette oxydation étant parfois accompagnée d'une combustion. La figure unique montre les résultats obtenus après analyse qualitative par infrarouge du taux d'oxydation de ce PMS liquide par rapport au temps.

On montre que les groupements **Si - H** contenus dans ce polyméthylsilane ou **PMS** sont responsables, au moins pour partie, de son instabilité à l'air.

### EXEMPLE 4: PRÉPARATION D'UNE COMPOSITION À BASE DE PVS ET D'UN SYSTÈME ANTIOXYDANT MONOCOMPOSANT.

20 mg de **BHT** en solution dans le toluène sont ajoutés à un échantillon de 20 g du polymère préparé à l'exemple 1. Un produit fluide (**PVS - 0,1 %.BHT,** par rapport au **PVS**), est obtenu après évaporation du solvant. Il présente une apparence identique au matériau de départ.

Aucune oxydation de surface n'est observée après exposition à l'air pendant 48 h, alors que celle-ci apparaît en moins de deux minutes pour le **PVS** non stabilisé de **l'exemple 1**.

La pyrolyse de ce polymère liquide, sous atmosphère inerte à 950° C, permet d'obtenir un matériau céramique à base de carbure de silicium, avec un rendement de 69 %.

Comparativement aux 62 % obtenus à l'**exemple 1,** il apparaît que l'adjonction d'un système antioxydant conforme à l'invention permet d'augmenter notablement le rendement de céramisation plus élevé.

D'autres concentrations en **BHT** et d'autres antioxydants ont été testés en appliquant la méthodologie du présent **exemple 4.**

Les résultats exprimés en temps nécessaire pour l'apparition d'une réticulation de surface (formation d'une peau) sont portés dans le **Tableau 1** ci-dessous.

**TABLEAU 1:**

| **ANTIOXYDANT** | **CONCENTRATION (%) PAR RAPPORT AU PVS** | **TEMPS POUR RÉTICULATION (HEURES)** |
|---|---|---|
| **PHENOLS** | | |
| P-méthoxyphénol | 0.2 | 10 |
| Hydroquinone | 0,2 | 10 |
| 3-tert-butylcatechol | 0,2 | 10 |
| BHT | 0,2 | 96 |
| BHT | 0,1 | 48 |
| BHT | 0,01 | 4 |
| BHT | 0,001 | 0,25 |
| 4,4'-méthylènebis(2,6-di-tert-butyl-4-méthylphénol) | 0,2 | 96 |
| (3,5-di-tert-butyl-5-hydroxyphényl) sulfide | 0,1 | 168 |
| IRGANOX 1010 | 0,1 | 120 |

| **AMINES** | | |
|---|---|---|
| Poly(2,2,3,4,tetraméthylquinoline) | 0,1 | 0,5 |
| N,phényl,napthylamine | 0,1 | 0,7 |
| Phénothiazine | 0,1 | 16 |
| Bis(2,2,6,6,tétraméthyl-4-pipéridinyl)sebacate | 0,1 | 12 |

| **OLEFINES** | | |
|---|---|---|
| Neo-alloocimène | 0,1 | 1 |

Il ressort du **tableau 1** que plusieurs antioxydants de type phénolique montrent une efficacité similaire, voire supérieure à celle du **BHT** et que la durée de la stabilisation des compositions à base de **PVS** est dépendante de la concentration antioxydant. Il ressort, également, du **tableau 1** que d'autres antioxydants que les phénols, en particulier les amines et les oléfines, peuvent procurer une stabilisation.

### EXEMPLE 5 : COMPOSITION STABILISÉE DE PVS CONTENANT UN SYSTÈME ANTIOXYDANT BICOMPOSANT.

18 ml de **BHT** (antioxydant primaire **C**_{**1**}) et 18 mg de tris(nonylphényl)phosphite (TNPP) (antioxydant secondaire **C**_{**2**})en solution dans le toluène sont ajoutés à 18 g du polymère préparé selon l'**exemple 1.** Après évaporation du solvant, on recueille un produit fluide (**PVS - 0,1 % poids BHT - 0,1 % poids TNPP** ; les **%** sont donnés par rapport au **PVS**) d'aspect similaire au matériau de départ. L'exposition de ce produit stabilisé à l'air ne provoque **pas de réticulation de surface avant 300 heures.**

La pyrolyse de ce polymère liquide, stabilisé sous atmosphère inerte à 950° C, permet d'obtenir un matériau céramique à base de carbure de silicium, **avec un remarquable rendement de 74,5 %.**

### EXEMPLE 6 : COMPOSITIONS STABILISÉES DE PVS CONTENANT UN SYSTÈME ANTIOXYDANT BICOMPOSANT.

Les compositions stabilisées de **PVS** ont été préparées en suivant la méthodologie donnée dans l'**Exemple 5.** On a fait varier la formulation du système antioxydant et, dans certains cas, sa concentration par rapport au polysilane considéré.

Le **tableau 2** ci-dessous présente les systèmes antioxydants utilisés, leurs concentrations en % en poids par rapport au **PVS** et les durées de stabilité à l'air correspondantes.

**TABLEAU 2:**

| **C**_{**1**} **ANTIOXYDANT PRIMAIRE** | **C**_{**2**} **ANTIOXYDANT SECONDAIRE** | **TEMPS POUR RÉTICULATION (HEURES)** |
|---|---|---|
| 0,1 BHT | | 48 |
| 0,1 BHT | 0,1 TNPP | 300 |
| | 0,1 TNPP | 0,1 |
| 0.1 BHT | 0,1 LTDP | 300 |
| | 0.1 LTDP | 0,1 |
| LTDP = dilaurylthiodipropionate | | |

Il ressort du **tableau 2** qu'il existe une importante synergie entre les phénols et les phosphites pour'la stabilisation du **PVS** à l'air. Les effets des combinaisons **BHT/TNPP** et **BHT/LTDP** sont nettement supérieurs à la somme des effets séparés du **BHT,** du **TNPP** et du **LTDP.**

### EXEMPLE 7 : COMPOSITION STABILISÉE DE PMS CONTENANT UN SYSTÈME ANTIOXYDANT MONO COMPOSANT.

580 mg du polymère obtenu à l'**exemple 3** sont ajoutés à 5,8 ml de **BHT** en solution dans du tétrahydrofuranne. Après évaporation du solvant, on recueille un produit fluide (**PMS - 1 % poids BHT** par rapport au **PMS**) d'apparence identique au produit de départ.

L'exposition du polymère stabilisé à l'air entraîne une incorporation d'oxygène extrêmement réduite (voir **figure unique**). La pyrolyse du polymère stabilisé sous atmosphère inerte à 950° C permet d'obtenir un matériau céramique à base de carbure de silicium, avec un rendement de 59 %. Une telle composition de polysilane peut, sans problème, être manipulée quelque temps à l'air. Il apparaît également que la céramisation n'est pas affectée par l'incorporation du système antioxydant conforme à l'invention.

### EXEMPLE 8 : COMPOSITION STABILISÉE DE PMS CONTENANT UN SYSTÈME ANTIOXYDANT BICOMPOSANT.

580 ml du polymère préparé à l'**exemple 3** sont ajoutés à 5,8 mg de **BHT** et à 5,8 ml de **TNPP** en solution dans le tétrahydrofuranne. Après évaporation du solvant, on recueille un produit fluide (**PMS - 1 % poids BHT - 1 % poids TNPP** ; les % étant exprimés par rapport au PMS) d'aspect identique au matériau de départ.

Comme le montre la **figure unique,** l'exposition à l'air de ce polymère entraîne une incorporation d'oxygène encore moindre que celle mesurée pour le **PMS de l'exemple 7.**

Le rendement de céramisation à 950° C, sous atmosphère inerte, est de l'ordre de 59 %.

### COMMENTAIRES:

Les **exemples 7 et 8** mettent, une nouvelle fois, en évidence des effets stabilisants du système antioxydant suivant l'invention vis-à-vis d'un polysilane du type **PMS.** On note, également, que ce système antioxydant n'a aucune répercussion négative quant au rendement de céramisation.

### EXEMPLE 9: COMPOSITION À BASE D'UN MÉLANGE PMS - PVS.

Sous atmosphère inerte, on prépare une composition contenant 80% en poids du polymère obtenu à l'**exemple 2** et 20% en poids du polymère de l'**exemple 3.** L'exposition d'un échantillon de ce matériau à l'air provoque une réticulation de surface dans un temps relativement court (5 heures).

Le rendement de céramisation à 950° C sous atmosphère inerte est de l'ordre de 41 %.

### EXEMPLE 10: COMPOSITION STABILISÉE À BASE D'UN MÉLANGE PMS - PVS, CONTENANT UN SYSTÈME ANTIOXYDANT MONOCOMPOSANT.

Sous atmosphère inerte, on ajoute à la composition obtenue à l'**exemple 9,** du **BHT** dissous dans le toluène en quantité telle que l'on obtienne une composition finale stabilisée contenant 0,1 % en poids de **BHT,** après évaporation du solvant. L'exposition d'un échantillon de ce matériau à l'air ne provoque **pas une réticulation avant 10 heures.** Le rendement de céramisation à 950° C, sous atmosphère inerte, de cette composition est de 41 %.

### COMMENTAIRES :

Les **exemples 9 et 10** mettent en évidence les effets stabilisants du système antioxydant suivant l'invention, vis-à-vis des mélanges de polysilanes. On note, également, que la céramisation n'est pas affectée par l'incorporation du système antioxydant conforme à l'invention.

### EXEMPLE 11 : COMPOSITION À BASE DE PMS ET D'ADDITIF DE RÉTICULATION (SiVi₄).

0,15 ml de **SiVi**_{**4**} sont ajoutés à 1,0 g du polymère obtenu à l'**exemple 3** pour donner un produit fluide. L'exposition du polymère à l'air entraîne une incorporation d'oxygène avec une réticulation en surface après **20 minutes.**

Le rendement de céramisation à 950° C sous atmosphère inerte est de l'ordre de 45%.

### EXEMPLE 12 : COMPOSITION STABILISÉE DE PMS - SiVi₄, CONTENANT UN SYSTÈME ANTIOXYDANT MONOCOMPOSANT.

1,0 g d'un mélange préparé à l'**exemple 11** est ajouté à 1 mg de **BHT** en solution dans le tétrahydrofuranne. Après évaporation du solvant, on recueille un produit fluide (**PMS - 0,1 % poids BHT**) d'aspect identique au matériau de départ.

L'exposition d'un échantillon de ce matériau à l'air ne provoque pas une réticulation **avant 48 heures**.

Le rendement de céramisation à 950° C sous atmosphère inerte est de l'ordre de 45%.

### COMMENTAIRES :

Les **exemples 11** et **12** mettent en évidence les effets stabilisants du système antioxydant suivant l'invention vis-à-vis des mélanges de polysilanes avec un additif organique de réticulation contenant des groupements oléfiniques. Il apparaît également que la céramisation n'est pas affectée par l'incorporation du système antioxydant conforme à l'invention.

### EXEMPLE 13 : COMPOSITION STABILISÉE DE PMS - SiVi₄, CONTENANT UN SYSTÈME ANTIOXYDANT BICOMPOSANT.

1,0 g d'un mélange préparé à l'**exemple 11** est ajouté à 1 mg de **BHT** et à 5,8 ml de **TNPP** en solution dans le tétrahydrofuranne. Après évaporation du solvant, on recueille un produit fluide (**PMS - 0,1 % poids BHT - 0,1 % poids TNPP,** les % étant exprimés par rapport au **PMS**) d'aspect identique au matériau de départ. L'exposition d'un échantillon de ce matériau à l'air ne provoque pas une réticulation **avant 96 heures.**

### COMMENTAIRES:

Les **exemples 11** à **13** mettent en évidence, d'une part, les effets stabilisants du système antioxydant suivant l'invention vis-à-vis des mélanges de polysilanes avec un additif organique de réticulation contenant des groupements oléfiniques et, d'autre part, la synergie existant entre les antioxydants primaires (**C**_{**1**}) et secondaires (**C**_{**2**}) conformes à l'invention.

## Revendications

1. Composition à base de polysilane(s), utilisée notamment pour la production de carbure de silicium,
caractérisée :
en ce qu'elle comprend :
▲ des chaînes **polysilaniques :**
→ de formule générale : 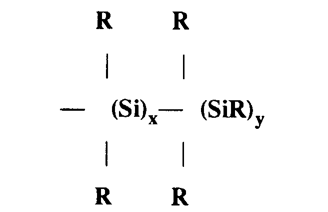 dans laquelle :
les groupements **R** peuvent être identiques ou différents, indépendants les uns des autres tout au long de la chaîne polymérique et choisis parmi les groupements suivants:
- hydrogène,
- groupements hydrocarbonés aliphatiques, linéaires, branchés ou cycliques yant de 1 à 10 atomes de carbone,
- groupements aromatiques, alkyliques ou aralkyliques, éventuellement substitués par des groupements fonctionnels contenant de l'azote, de l'oxygène, du phosphore ou du bore,
- les groupements siliciques ou organo-siliciques,
- les groupements oléfiniques insaturés ayant de 1 à 18 atomes de carbone,
**x** et **y** sont choisis de manière à obtenir un polymère ayant un poids moléculaire moyen supérieur à 50 unités de masse ;
ces chaînes polysilaniques étant, avantageusement, celles ayant sur leur squelette des groupements hydrogène (**Si - H**) et/ou des groupements oléfiniques (Si-X), X étant un radical insaturé possédant, de préférence. de 1 à 18 atomes de carbone et, plus préférentiellement encore, 2 atomes de carbone, ce qui correspond au groupement vinyle (**Vi :- CH = CH**_{**2**}) ;
→ susceptibles de se dégrader par oxydation et formation de produits du type polysiloxane,
▲ et/ou des chaînes **polysilaniques** de formule générale telle que définie ci-dessus, et aptes à se lier directement entre elles par réaction entre des radicaux **Si - H** et **Si - X,** et/ou indirectement entre elles par l'intermédiaire d'un additif de réticulation et par réaction entre des radicaux **A - X et A - H, A** étant un radical organique, organosilicique ou silicique X étant un radical oléfinique comportant de préférence, de 1 à 18 atome de carbone et, plus préférentiellement encore, étant constitué par un radical vinylique (**Vi : CH = CH**_{**2**}) ;
▲ et au moins un système antioxydant constitué par au moins un composé antioxydant choisi parmi les antioxydants phénoliques, oléfiniques ou aminés de la chimie des polymères organiques exempts de silicium et leurs mélanges et, de préférence, parmi les antioxydants phénoliques et leurs mélanges ;
et en ce que ces chaînes polysilaniques sont stabilisées à l'état non réticulé.

2. Composition selon la revendication 1, caractérisée en ce que le système antioxydant comprend :
- au moins un premier composé (**C**_{**1**}), dénommé antioxydant primaire et choisi dans la famille des phénols et/ou des amines et/ou des oléfines,
- et au moins un deuxième composé (**C**_{**2**}), dénommé antioxydant secondaire, et choisi dans la famille des produits soufrés et/ou des produits phosphorés.

3. Composition selon la revendication 1 ou la revendication 2, caractérisée en ce que le composé antioxydant (**C**_{**1**}) est choisi parmi la liste suivante :
- l'hydroquinone et ses dérivés,
- le p-méthoxyphénol,
- le 1,2-dihydroxybenzène,
- le 6-tert-butyl-1,2-dihydroxybenzène,
- le 2,6-di-tert-butyl-4-méthylphénol (**BHT**),
- le 4,4'-méthylènebis(2,6-di-tert-butylphénol),
- le néo-allo-ocimène,
- la -dinaphtylamine,
- la phénothiazine,
- les phénylènediamines et leurs dérivés,
- la quinoléine et ses dérivés,
- et leurs mélanges,
le **BHT** et ses dérivés de formules **IIb, IId** et **IIe** étant particulièrement préférés
(IIb) 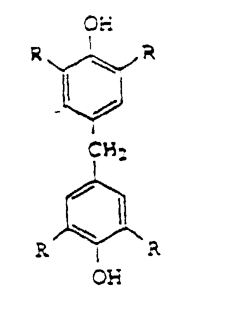
(IId) 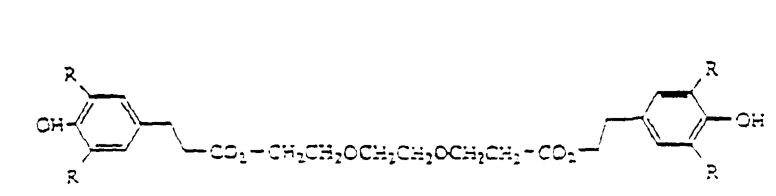
(IIe) 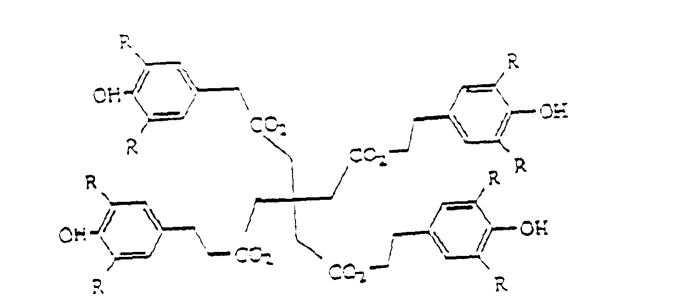 R = tert-butyl.

4. Composition selon la revendication 3, caractérisée en ce que les produits soufrés sont choisis parmi la liste des composés de formules générales suivantes :
**(R'O**_{**2**}**C-R'-)**_{**n**}**S, (R'**_{**2**}**NCS**_{**2**}**)**_{**n**}**M, ((R'O)**_{**2**}**PS**_{**2**}**)**_{**n**}**M, (R'OCS**_{**2**}**)**_{**n**}**M**
dans lesquelles :
- **R**' est un groupement organique aromatique, aliphatique ou aralkylique ayant 1 à 18 atomes de carbone, les groupements **R**' pouvant être identiques ou différents, indépendants les uns des autres dans le composé;
- **M** est un métal, de préférence du type **Ni** ou **Zn,**
- **n** est inférieur ou égal à 2.

5. Composition selon la revendication 4, caractérisée en ce que les produits soufrés sont choisis parmi les dérivés dialkylthiodipropioniates, de préférence; le dilaurylthiodipropionate ou le distéarylthiodipropionate ou les dérivés métalliques de dithiocarbamates, de dithioxanthates ou de dithiophosphonates, les dérivés dialkylthiodipropionates étant particulièrement préférés.

6. Composition selon la revendication 2, caractérisée en ce que les produits phosphorés sont choisis parmi les composés de formules générales suivantes :
**(R"O)**_{**3**}**P, (R"O)**_{**3**}**PO, (R"O)**_{**2**}**PO**_{**2**}**H, R"O-P-R"'R"**
est un groupement organique aromatique, aliphatique ou aralkylique ayant de 1 à 18 atomes de carbone, les groupements **R"** pouvant être identiques ou différents, indépendants les uns des autres dans le composé, **R"'** est un groupement chélatant, de préférence, le catéchol.

7. Composition selon la revendication 6, caractérisée en ce que les produits phosphorés sont choisis parmi la liste non limitative suivante :
- tris (nonylphényl) phosphite,
- triphénylphosphite,
- tri-t-butylphosphite,
- catéchol-mono(2,6-di-tert-butyl-4 méthylphényl)phosphite,
le tris (nonylphényl) phosphite étant particulièrement préféré.

8. Composition selon la revendication 1, caractérisée en ce qu'elle est en solution dans un solvant ou un mélange de solvants.

9. Composition selon la revendication 1, caractérisée en ce que le système antioxydant est présent dans la composition à raison de 10⁻⁵ % à 10 % (de 0,1 à 10⁵ ppm) en poids par rapport au poids de polysilane(s) et, de préférence, de 0,01 % à 1 % (de 100 à 10 000 ppm).

10. Composition selon la revendication 1, caractérisée en ce que le ou les polysilane(s) est (sont) choisi(s) parmi les polyvinylhydrogénosilanes (**PVS**), tels que le polyvinylméthylhydrogénosilane ou le polyvinylhydrogénosilane, ou parmi les polyalkylhydrogénosilanes (**PMS**), tel que le polyméthylhydrogénosilane.

11. Composition selon la revendication 1, caractérisée en ce que l'additif de réticulation est un composé organique, ou organosilicique, de structure polymérique ou non, de préférence, choisi parmi les produits suivants:
**C**_{**6**}**H**_{**5**} **- Si - H**_{**3**}**, CH**_{**3**} **- CH**_{**2**}**-Si - H**_{**2**}**, Si - Vi**_{**4**} **ou C**_{**6**}**H**_{**4**}**(Vi)**_{**2**}

12. Procédé de stabilisation d'une composition à base de polysilanes comprenant des chaînes polysilaniques de formule générale : 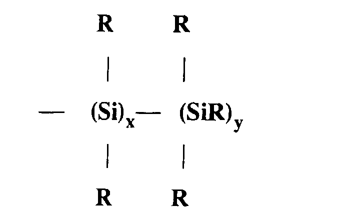 dans laquelle :
les groupements **R** peuvent être identiques ou différents, indépendants les uns des autres tout au long de la chaîne polymérique et choisis parmi les groupements suivants:
- hydrogène,
- groupements hydrocarbonés aliphatiques, linéaires, branchés ou cycliques ayant de 1 à 10 atomes de carbone,
- groupements aromatiques, alkyliques ou aralkyliques, éventuellement substitués par des groupements fonctionnels contenant de l'azote, de l'oxygène, du phosphore ou du bore,
- les groupements siliciques ou organo-siliciques,
caractérisé en ce que l'on stabilise ces chaînes polysilaniques à l'état non réticulé à l'aide d'au moins un système antioxydant constitué par au moins un composé antioxydant choisi parmi les antioxydants phénoliques, oléfiniques ou aminés de la chimie des polymères organiques exempts de silicium et leurs mélanges et, de préférence, parmi les antioxydants phénoliques et leurs mélanges.

13. Procédé pour la production de carbure de silicium, caractérisé en ce qu'il consiste à pyrolyser, sous vide ou en atmosphère inerte, une composition selon la revendication 1.

## Patentansprüche

1. Zusammensetzung auf Basis von Polysilan(en), die insbesondere für die Herstellung von Siliciumcarbid verwendet wird, dadurch gekennzeichnet:
daß sie umfaßt:
◆ Polysilanketten:
→ der allgemeinen Formel: 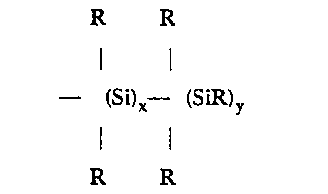 in der:
die Gruppen R unabhängig voneinander über die gesamte Länge der polymeren Kette gleich oder verschieden sein können und ausgewählt sein können unter den folgenden Gruppen:
- Wasserstoff,
- kohlenwasserstoffhaltigen aliphatischen linearen, verzweigtkettigen oder cyclischen Gruppen, die 1 bis 10 Kohlenstoffatome aufweisen,
- aromatischen Gruppen, Alkylgruppen oder Arylalkylgruppen, die gegebenenfalls durch funktionelle Gruppen, die Stickstoff, Sauerstoff, Phosphor oder Bor enthalten, substituiert sind,
- den Silicium enthaltenden Gruppen oder Organosiliciumgruppen,
- den olefinischen ungesättigten Gruppen mit 1 bis 18 Kohlenstoffatomen,
x und y so ausgewählt sind, daß ein Polymer mit einer mittleren relativen Molekülmasse über 50 Masseeinheiten erhalten wird;
wobei diese Polysilanketten vorteilhafterweise jene sind, die in ihrem Gerüst Wasserstoffgruppen (Si - H) und/oder olefinische Grupen (Si - X) aufweisen, wobei X ein ungesättigter Rest ist, der vorzugsweise 1 bis 18 Kohlenstoffatome und noch bevorzugter 2 Kohlenstoffatome aufweist, was der Vinylgruppe entspricht (Vi: -CH = CH₂);
→ die durch Oxidation und Bildung von Produkten vom Polysiloxantyp abgebaut werden können,
◆ und/oder Polysilanketten der allgemeinen Formel, wie vorstehend definiert, die imstande sind, sich direkt durch Reaktion zwischen Resten Si - H und Si - X miteinander zu verbinden und/oder sich indirekt miteinander zu verbinden über das Zwischenglied eines Vernetzungsadditivs und durch Reaktion zwischen Resten A - X und A - H, wobei A ein organischer Rest, Organosiliciumrest oder ein Silicium enthaltender Rest ist, wobei X ein olefinischer Rest ist, der vorzugsweise 1 bis 18 Kohlenstoffatome umfaßt und noch mehr bevorzugt durch einen Vinylrest (Vi: CH = CH₂) gebildet wird;
◆ und mindestens ein oxidationshemmendes System, gebildet aus mindestens einer Antioxidationsmittelverbindung, ausgewählt aus den phenolischen, olefinischen oder aminierten Antioxidationsmitteln der Chemie der organischen Polymere, die kein Silicium enthalten, und deren Mischungen und vorzugsweise unter den phenolischen Antioxidationsmitteln und deren Mischungen;
und dadurch, daß diese Polysilanketten in nicht vernetztem Zustand stabilisiert sind.

2. Zusammensetzung nach Anspruch 1, dadurch gekennzeichnet, daß das oxidationshemmende System umfaßt:
- mindestens eine erste Verbindung (C₁), die als primäres Antioxidationsmittel bezeichnet wird und ausgewählt wird aus der Familie der Phenole und/oder Amine und/oder Olefine,
- und mindestens einer zweiten Verbindung (C₂), die als sekundäres Antioxidationsmittel bezeichnet wird und ausgewählt wird aus der Familie der schwefelhaltigen Produkte und/oder der phosphorhaltigen Produkte.

3. Zusammensetzung nach Anspruch 1 oder Anspruch 2, dadurch gekennzeichnet, daß die Antioxidationsmittelverbindung (C₁) aus der folgenden Liste ausgewählt wird:
- Hydrochinon und seinen Derivaten,
- p-Methoxyphenol,
- 1,2-Dihydroxybenzol,
- 6-tert.-Butyl-1,2-dihydroxybenzol,
- 2,6-Di-tert.-butyl-4-methylphenol (BHT),
- 4,4'-Methylenbis(2,6-di-tert.-butylphenol),
- Neoalloocimen,
- Dinaphthylamin,
- Phenothiazin,
- den Phenylendiaminen und ihren Derivaten,
- Chinolein und seinen Derivaten,
- und deren Mischungen,
wobei BHT und seine Derivate der Formeln IIb, IId und IIe besonders bevorzugt sind.

4. Zusammensetzung nach Anspruch 3, dadurch gekennzeichnet, daß die schwefelhaltigen Produkte ausgewählt werden aus der Liste der Verbindungen mit den folgenden allgemeinen Formeln:
(R'O₂C-R'-)ₙS, (R'₂NCS₂)ₙM, ((R'O)₂PS₂)ₙM, (R'OCS₂)ₙM,
in denen:
- R' eine aromatische organische Gruppe, aliphatische organische Gruppe oder organische Arylalkylgruppe mit 1 bis 18 Kohlenstoffatomen ist, wobei die Gruppen R' unabhängig voneinander in der Verbindung gleich oder verschieden sein können;
- M ein Metall, vorzugsweise vom Typ Ni oder Zn ist;
- n kleiner oder gleich 2 ist.

5. Zusammensetzung nach Anspruch 4, dadurch gekennzeichnet, daß die schwefelhaltigen Produkte ausgewählt werden aus den Dialkylthiodipropionat-Derivaten, vorzugsweise aus Dilaurylthiodipropionat oder Distearylthiodipropionat, oder den metallischen Derivaten von Dithiocarbamaten, Dithioxanthaten oder Dithiophosphonaten, wobei die Dialkylthiodipropionat-Derivate besonders bevorzugt sind.

6. Zusammensetzung nach Anspruch 2, dadurch gekennzeichnet, daß die phosphorhaltigen Produkte ausgewählt werden aus den Verbindungen mit den folgenden allgemeinen Formeln:
(R"O)₃P, (R"O)₃PO, (R"O)₂PO₂H, R''O-P-R'''R''
ist eine organische aromatische Gruppe, eine organische aliphatische Gruppe oder eine organische Arylalkylgruppe mit 1 bis 18 Kohlenstoffatomen, wobei die Gruppen R" unabhängig voneinander in der Verbindung gleich oder verschieden sein können, R"' eine chelatbildende Gruppe, vorzugsweise Catechol, ist.

7. Zusammensetzung nach Anspruch 6, dadurch gekennzeichnet, daß die phosphorhaltigenm Produkte ausgewählt werden aus der folgenden nicht-beschränkenden Liste:
- Tris (nonylphenyl)phosphit,
- Triphenylphosphit,
- Tri-tert.-butylphosphit,
- Catechol-mono(2,6-di-tert.-butyl-4-methylphenyl)phosphit,
wobei Tris(nonylphenyl)phosphit besonders bevorzugt ist.

8. Zusammensetzung nach Anspruch 1, dadurch gekennzeichnet, daß sie sich in Lösung in einem Lösemittel oder einer Mischung von Lösemitteln befindet.

9. Zusammensetzung nach Anspruch 1, dadurch gekennzeichnet, daß das oxidationshemmende System in der Zusammensetzung in einer Menge von 10⁻⁵ Gew.-% bis 10 Gew.-% (von 0,1 bis 10⁵ ppm) bezogen auf das Gewicht des Polysilans oder der Polysilane und vorzugsweise von 0,01 % bis 1 % (von 100 bis 10000 ppm) vorliegt.

10. Zusammensetzung nach Anspruch 1, dadurch gekennzeichnet, daß das oder die Polysilan(e) ausgewählt wird bzw. werden unter den Polyvinylhydrogensilanen (PVS), wie Polyvinylmethylhydrogensilan oder Polyvinylhydrogensilan, oder unter den Polyalkylhydrogensilanen (PMS), wie Polymethylhydrogensilan.

11. Zusammensetzung nach Anspruch 1, dadurch gekennzeichnet, daß das Vernetzungsadditiv eine organische Verbindung oder Organosiliciumverbindung von gegebenenfalls polymerer Struktur ist, die vorzugsweise aus den folgenden Produkten ausgewählt wird:
C₆H₅-Si-H₃, CH₃-CH₂-Si-H₂, Si-Vi₄ oder C₆H₄(Vi)₂·

12. Verfahren zur Stabilisierung einer Zusammensetzung auf Basis von Polysilanen, umfassend Polysilanketten der allgemeinen Formel: 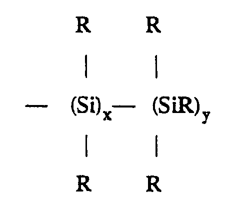 in der:
die Gruppen R unabhängig voneinander über die gesamte Länge der polymeren Kette gleich oder verschieden sein können und ausgewählt sein können unter den folgenden Gruppen:
- Wasserstoff,
- kohlenwasserstoffhaltigen aliphatischen linearen, verzweigtkettigen oder cyclischen Gruppen, die 1 bis 10 Kohlenstoffatome aufweisen,
- aromatischen Gruppen, Alkylgruppen oder Arylalkylgruppen, die gegebenenfalls durch funktionelle Gruppen, die Stickstoff, Sauerstoff, Phosphor oder Bor enthalten, substituiert sind,
- den Silicium enthaltenden Gruppen oder Organosiliciumgruppen,
dadurch gekennzeichnet, daß man die Polysilanketten in nicht vernetztem Zustand mittels mindestens eines oxidationshemmenden Systems stabilisiert, das aus mindestens einer Antioxidationsmittelverbindung, ausgewählt unter den phenolischen, olefinischen oder aminierten Antioxidationsmitteln der Chemie der organischen Polymere, die kein Silicium enthalten, und deren Mischungen und vorzugsweise aus den phenolischen Antioxidationsmitteln und deren Mischungen, gebildet wird.

13. Verfahren zur Herstellung von Siliciumcarbid, dadurch gekennzeichnet, daß es darin besteht, eine Zusammensetzung nach Anspruch 1 unter Vakuum oder in einer inerten Atmosphäre zu pyrolysieren.

## Claims

1. A polysilane-based composition, used particularly for producing silicon carbide,
characterised :
in that it comprises:
△ **polysilane** chains :
→ of general formula : 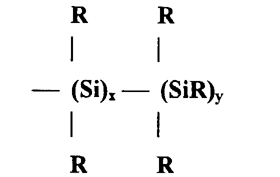 in which :
the **R** groups can be identical or different, indépendant from one another along the whole length of the polymer chain and chosen from the following groups :
- hydrogen,
- aliphatic, linear, branched or cyclic hydrocarbonated groups having 1 to 10 carbon atoms,
- aromatic, alkyl or aralkyl groups, substituted where appropriate by functional groups containing nitrogen, oxygen, phosphorus or boron,
- silicon or organo-silicon groups,
- unsaturated olefin groups having 1 to 18 carbon atoms,
**x** and **y** are chosen so as to obtain a polymer having an average molecular weight greater than 50 units of mass ;
such polysilane chains being, advantageously, chains having on their skeleton hydrogen groups (**Si - H**) and/or olefin groups (Si-X), X being an unsaturated radical, preferably comprising 1 to 18 carbon atoms and, more preferably still, comprising 2 carbon atoms, which corresponds to the vinyl group (**Vi :- CH = CH**_{**2**}) ;
→ capable of being degraded by oxidation and the formation of polysiloxane-type products,
△ and/or **polysilane** chains of general formula as defined above, and suitable for being bound together directly by a reaction between **Si - H** and **Si - X** radicals, and/or indirectly through the intermediary of a crosslinking additive and by a reaction between **A - X** and **A - H** radicals, A being an organic, organo-silicon or silicon radical, X being an olefin radical, preferably comprising 1 to 18 carbon atoms and, more preferably still, being constituted by a vinyl radical (VI : CH = CH₂);
△ and at least one antioxidant system constituted by at least one antioxidant compound chosen from the phenol, olefin or amine antioxidants of the chemistry of silicon-free organic polymers and mixtures thereof and, preferably, from phenol antioxidants and mixtures thereof;
and in that such polysilane chains are stabilised when not crosslinked.

2. A composition according to Claim 1, characterised in that the antioxidant System comprises:
- at least one first compound (**C**_{**1**}), termed a primary antioxidant and chosen from the family of phenols and/or amines and/or olefins,
- at least one second compound (**C**_{**2**}), termed a secondary antioxidant, chosen from the family of sulphurous products and/or phosphorus-containing products.

3. A composition according to Claim 1 or Claim 2, characterised in that the antioxidant compound (**C**_{**1**}) is chosen from the following list:
- hydroquinone and its derivatives,
- p-methoxyphenol,
- 1,2-dihydroxybenzene,
- 6-tert-butyl-1,2-dihydroxybenzene,
- 2,6-di-tert-butyl-4-methylphenol (**BHT**),
- 4,4'-methylenebis-(2,6-di-tert-butylphenol),
- neo-allo-ocimene,
- dinaphthylamine,
- phenothiazine,
- phenylenediamines and their derivatives,
- quinoline and its derivatives,
- and mixtures thereof,
BHT and its derivatives with the formulae IIb, IId and IIe being particularly preferred.

4. A composition according to Claim 3, characterised in that the sulphurous products are chosen from the list of compounds with the following general formulae:
**(R'O**_{**2**}**C-R'-)**_{**n**}**S, (R'**_{**2**}**NCS**_{**2**}**)**_{**n**}**M, ((R'O)**_{**2**}**PS**_{**2**}**)**_{**n**}**M, (R'OCS**_{**2**}**)**_{**n**}**M**
**in which:**
- **R'** is, an aromatic, aliphatic or aralkyl organic group having 1 to 18 carbon atoms, where the **R'** groups can be identical or différent, independent from one another in the compound;
- **M** is a metal, preferably of the **Ni** or **Zn** type;
- **n** is less than or equal to 2.

5. A composition according to Claim 4, characterised in that the sulphurous products, are chosen from dialkylthiodipropionate derivatives, preferably dilaurylthiodipropionate or distearylthiodipropionate or the metallic derivatives of dithiocarbamates, dithioxanthates or dithiophosphonates, dialkylthiodipropionate derivatives being particularly preferred.

6. A composition according to Claim 2, characterised in that the phosphorus-containing products are chosen from compounds with the following general formulae:
**(R"O)**_{**3**}**P, (R"O)**_{**3**}**PO, (R"0)**_{**2**}**PO**_{**2**}**H, R"O-P-R"'R"**
is an aromatic, aliphatic or aralkyl organic group having 1 to 18 carbon atoms, where the **R"** groups can be identical or different, independent from one another in the compound, **R"'** is a chelating group, preferably catechol.

7. A composition according to Claim 6, characterised in that the phosphorus-containing products are chosen from the following non-exhaustive list:
- tris-(nonylphenyl) phosphite,
- triphenylphosphite,
- tri-t-butylphosphite,
- catechol-mono(2,6-di-tert-butyl-4 methylphenyl)phosphite,
tris-(nonylphenyl) phosphite being particularly preferred.

8. A composition according to Claim 1, characterised in that it is in solution in a solvent or a mixture of solvents.

9. A composition according to Claim 1, characterised in that the antioxidant system is present in the composition at the rate of 10⁻⁵% to 10% (0.1 to 10⁵ ppm) by weight relative to the weight of polysilane(s) and, preferably, 0.01% to 1% (100 to 10,000 ppm).

10. A composition according to Claim 1, characterised in that the polysilane(s) is (are) chosen from polyvinylhydrogenosilanes (**PVSs**), such as polyvinylmethylhydrogenosilane or polyvinylhydrogenosilane, or from polyalkylhydrogenosilanes (**PMSs**), such as polymethylhydrogeno-silane.

11. A composition according to Claim 1, characterised in that the crosslinking additive is an organic or organosilicic compound, with or without a polymeric structure, preferably chosen from the following products:
**C**_{**6**}**H**_{**5**} **- Si - H**_{**3**}**, CH**_{**3**} **- CH**_{**2**}**-Si - H**_{**2**}**, Si - Vi**_{**4**} **or C**_{**6**}**H**_{**4**}**(Vi)**_{**2**}

12. A process for stabilising a polysilane-based composition comprising polysilane chains of general formula : 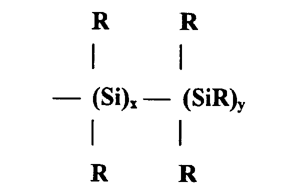 in which :
the **R** groups can be identical or different, indépendant from one another along the whole length of the polymer chain and chosen from the following groups :
- hydrogen,
- aliphatic, linear, branched or cyclic hydrocarbonated groups having 1 to 10 carbon atoms,
- aromatic, alkyl or aralkyl groups, substituted where appropriate by functional groups containing nitrogen, oxygen, phosphorus or boron,
- silicon or organo-silicon groups,
characterised in that such polysilane chains are stabilised when not cross-linked using at least one antioxidant system constituted by at least one antioxidant compound chosen from the phenol, olefin or amine antioxidants of the chemistry of silicon-free organic polymers and mixtures thereof and, preferably, from phenol antioxidants and mixtures thereof

13. A process for producing silicon carbide, characterised in that it consists of pyrolysing, in a vacuum or in an inert atmosphere, a composition according to Claim 1.
